# EUROPEAN PATENT APPLICATION

(11) **EP 4 806 273 A1**
(43) Date of publication of application: **16.09.2026**
(21) Application number: 26164047.8
(22) Date of filing: 11.03.2026
(51) Int. Cl.: A23G 9/22, B23K 26/00, B23K 26/08, B23K 26/21, F28D 7/10, B23K 26/244, B23K 26/302, B23K 37/053

(54) **METHOD AND PLANT FOR MAKING A BATCH FREEZING UNIT AND BATCH FREEZING UNIT OBTAINED BY SUCH METHOD**

(30) Priority: 14.03.2025 IT 202500005256
(71) Applicant: Ali Group S.r.l. - Carpigiani, 20063 Cernusco sul Naviglio, Milano (IT)
(72) Inventor: TASSI, Federico, 40122 BOLOGNA (IT); GROSU, Andrei Gabriel, 40064 OZZANO DELL'EMILIA (BOLOGNA) (IT)
(74) Representative: Milli, Simone

(57) **Abstract**

A method for making a batch freezing unit (100) for containing liquid or semiliquid food products is provided. The method comprises the steps of:
- providing a first hollow cylinder (1), extending along a main axis (X) and having an outer side wall (1e) on which one grooved profile (1s) defining a continuous circuit is formed;
- providing a coupling member (2);
- arranging the coupling member (2) circumferentially to, and outside, the first cylinder (1), so as to completely enclose the outer side wall (1e) of the first cylinder (1).

The method comprises also a step of carrying out a fully penetrating weld of an inner wall (2i) of the coupling member (2) to the first cylinder (1) at the grooved profile (1s).

## Description

The present invention relates to the field of food technologies.

In particular, the present invention relates to the technical field of the machines for preparing liquid or semiliquid food products.

In particular, object of the present invention is a method for making a batch freezing unit for containing liquid or semiliquid food products. Object of the present invention is also the batch freezing unit directly obtained by carrying out the steps of the method according to the present description and the plant for making the same batch freezing unit.

It is known that the batch freezing units now available on the market are obtained by realization methods comprising welding processes allowing hermetic joints to be obtained between welded surfaces, defining thereby a path for the heat transfer fluid.

Among the known welding techniques there is the resistance welding carried out by means of a metal electrode. This kind of welding uses the passage of electric current to melt materials in the contact points. Resistance welding is suitable for overlapped joints and for elements with simple geometry, but the applicant has experimentally found that it is not suitable for more complex structures, in particular batch freezing units working with refrigeration plants at particularly high pressures (e.g. CO2). Such welding technique can indeed have weaknesses when applied to cylindrical structures subjected to high pressures. In fact, in the batch freezing units some welding techniques could not guarantee an optimal sealing with time or allow to overcome the tests needed for their implementation (e.g. testing) with particularly high pressures. Moreover, it is to be highlighted that the thermal expansion and contraction cycles, such units are subjected to, could weaken the welded joints. For example, especially in the areas where during welding the material has been subjected to microstructural alterations cracks in the weld could occur due to the cyclic stresses with time caused by high temperature and pressure values.

The batch freezing units can be thermoregulated by using trans-critical heat transfer fluids, as for example carbon dioxide, which allow to guarantee an efficient control of the temperature during the batch freezing process.

In the field, it is needed to provide a realization method that guarantees the batch freezing unit, thus obtained, to resist to the usage of trans-critical heat transfer fluids which work at extremely high pressures, higher than 100 bar, and that has to be tested at extremely high pressures (even near 400 bar). In such applications, the welding quality becomes a determinant factor in order to obtain an efficient heat exchange system. An efficient weld ensures a high mechanical sealing and prevents heat transfer fluid leakages which could compromise the system performance and increase the energy consumption of the same.

The weld guarantees also the operational conditions needed for the refrigeration process to be maintained.

The usage of trans-critical fluids allows to obtain a rapid and efficient cooling of the products contained in the batch freezing unit, thanks to the high thermodynamic capacity of the fluid, which works at very high pressures and goes through compression and expansion cycles with significative temperature and pressure variations. Anyway, these working conditions can submit the elements of the batch freezing unit, in particular the welded joints, to cyclic stresses which could lead to the formation of cracks and consequently to potential coolant leakages.

It is also to be highlighted that in the field concerned there is the need to submit the batch freezing unit to a test, at pressures higher than those of normal working.

In the field concerned, it is essential to carry out a welding which ensures an efficient functioning of the batch freezing unit, also at high pressures, thus guaranteeing its optimal performance.

In particular, aim of the present invention is to provide a method for making a batch freezing unit for containing and thermally treating liquid or semiliquid food products, which allows to overcome the drawbacks of the realization methods of the known art.

Another aim of the present invention is to provide a batch freezing unit, obtained by carrying out the steps of the above cited method, which becomes an efficient heat exchange system, and which can resist also to particularly high pressures of the heat transfer fluid.

Another aim of the present invention is to provide a batch freezing unit which can resist also to particularly high pressures of the heat transfer fluid.

Yet, another aim of the present invention is to provide a plant for making a batch freezing unit, which is object as well of the present invention.

The defined technical field and the specified aims are substantially reached by a method for making a batch freezing unit, a batch freezing unit and a plant for making the same comprising the technical features of one or more of the appended claims.

Other features and advantages of the present invention will be clearer from the explanatory, and therefore not limiting, description of some preferred, but not exclusive, embodiments of a batch freezing units, as it is shown in the appended drawings, in which:

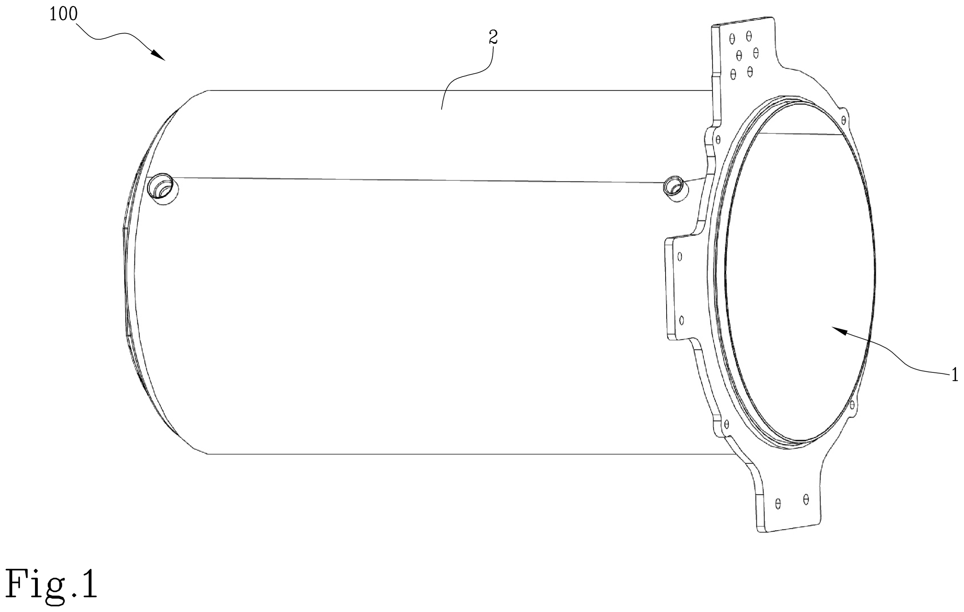

- figure 1 shows an overall perspective view of the batch freezing unit, object of the present description;
- figures 2A shows an exploded perspective view of a first embodiment of the batch freezing unit, object of the present description;
- figure 2B shows an exploded perspective view of a second embodiment of the batch freezing unit, object of the present description;
- figure 3 shows a front view of an element of the batch freezing unit, shown in figures 1, 2A and 2B;

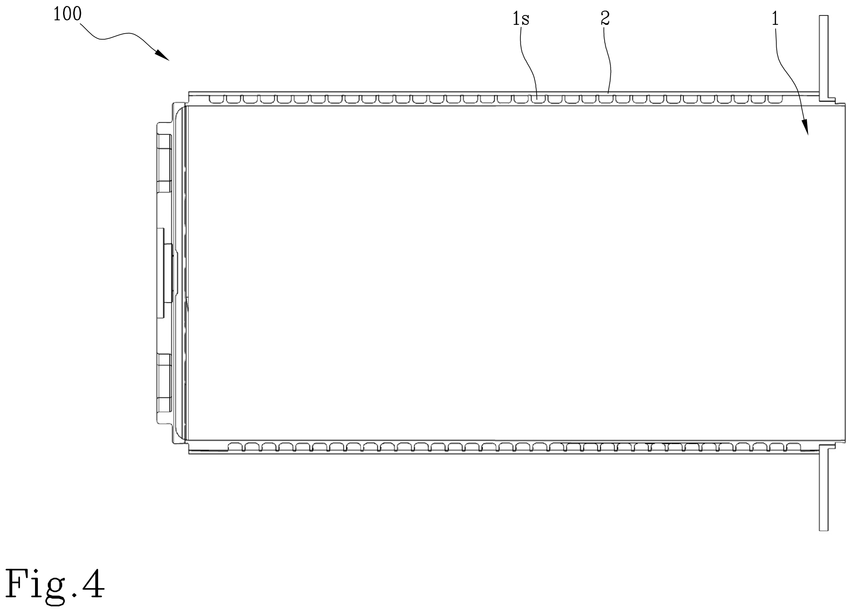

- figure 4 shows a section view of the batch freezing unit of figure 1;
- figure 5 shows a detail, according to an enlarged view, of the weld provided by carrying out the steps of the method, object of the present description;
- figure 6 shows a schematic view of a plant for carrying out the method, object of the invention.

Object of the present description is a method for making a batch freezing unit 100 for containing liquid or semiliquid food products.

The realization method comprises the step of providing a first cylinder 1. According to an aspect, the first cylinder 1 is hollow, extends along a main axis X and has an outer side wall 1e.

At least a grooved profile 1s is obtained on the outer side wall 1e of the first cylinder 1.

According to another aspect of the present description, a plurality of grooved profiles 1s is obtained on the outer side wall 1e of the first cylinder 1.

The grooved profiles 1s defining the plurality of grooved profiles 1s are arranged side by side along a helical path.

In short, these grooved profiles 1s define a plurality of channels, helically wound, according to a multi-threaded scheme.

Each grooved profile 1s defines a continuous circuit developing along the whole outer side wall 1e of the first cylinder 1.

Such grooved profile 1s is preferably realized by means of material removal techniques, for example by means of milling.

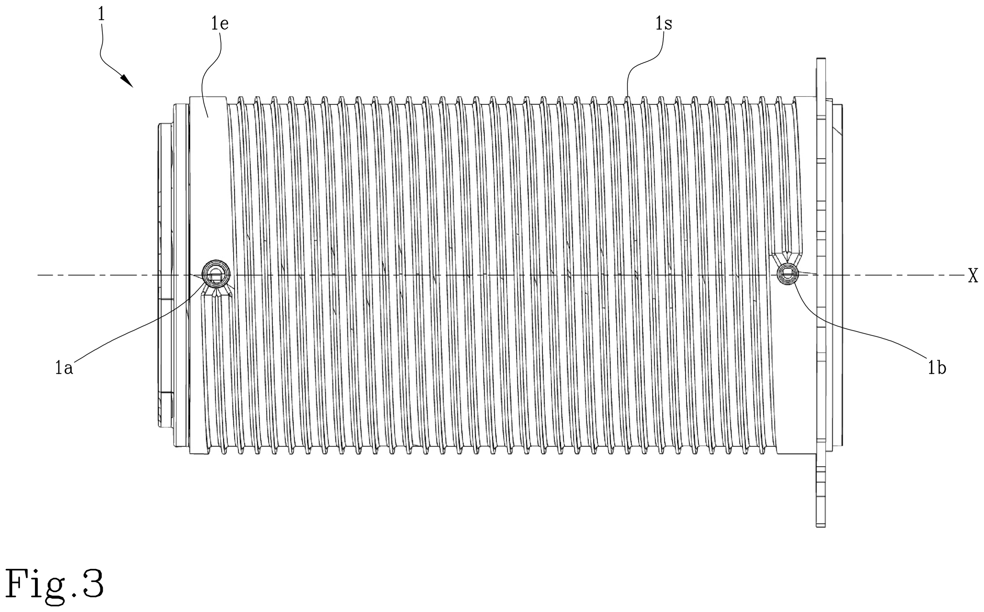

According to an aspect shown in figure 3, the grooved profile 1s develops along the whole outer side wall 1e of the first cylinder 1.

The grooved profile 1s develops starting from a first end 1a up to a second end 1b. The first end 1a defines the inlet point of a heat transfer fluid in the continuous duct and the second end 1b defines the outlet point of the heat transfer fluid from the continuous duct.

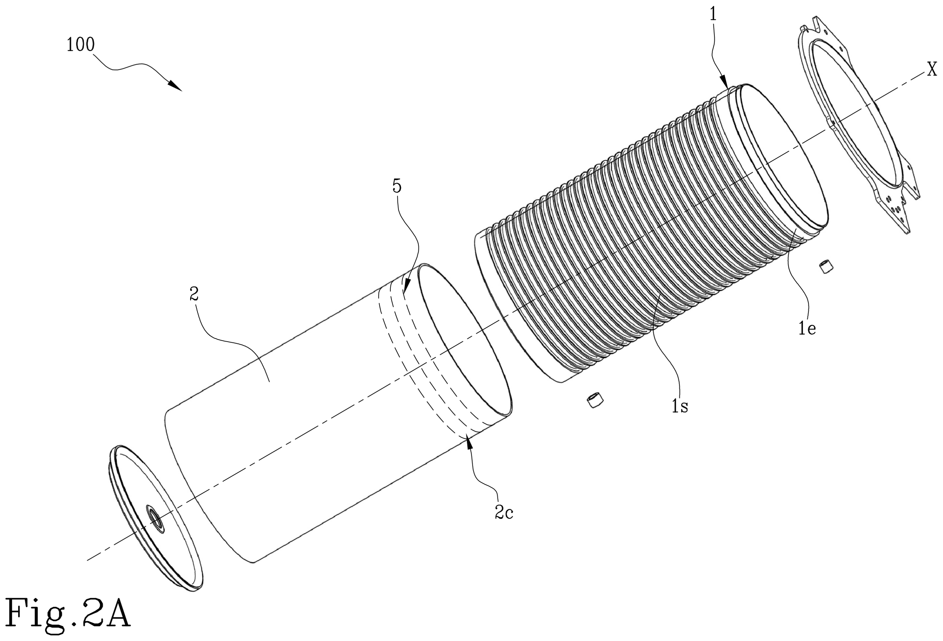

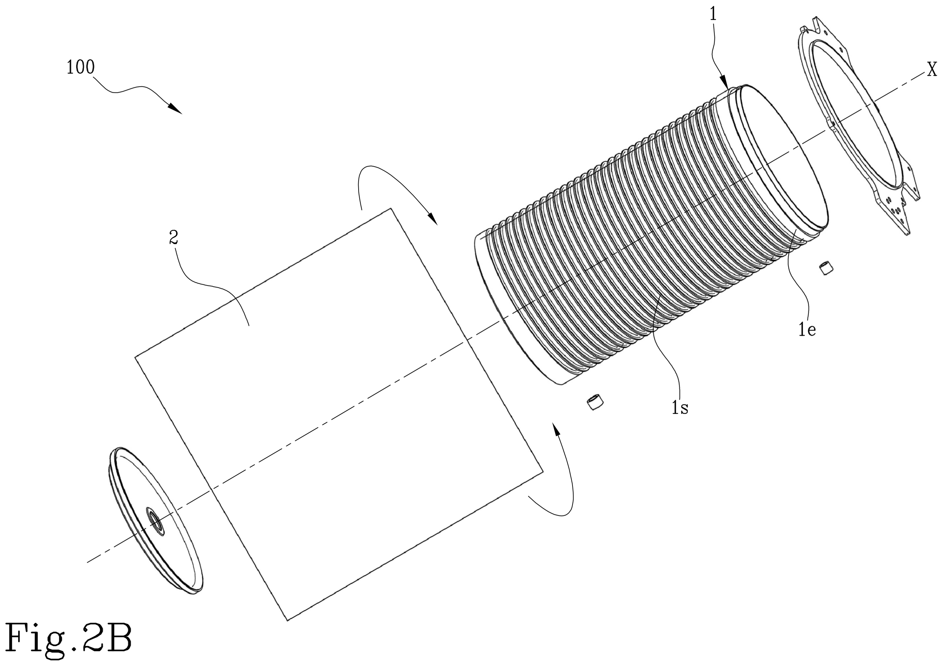

Moreover, the realization method according to the present description and the embodiments shown in figures 2A and 2B comprises the step of providing a coupling member 2.

According to an aspect of the present description shown in figure 2A, the coupling member 2 is constituted by a sheet in metal material.

According to an aspect of the present description shown in figure 2B, the coupling member 2 is shaped as a second cylinder.

The method provides the step of arranging the coupling member 2 circumferentially to, and outside, the first cylinder 1.

The method comprises the step of calendering the sheet in metal material so to make the coupling member 2.

In short, the sheet in metal material is folded, to define a substantially cylindrical body.

Advantageously, the calendering step of the coupling member 2 is simple to be realized and does not need the use of particularly expensive tools.

The coupling member 2 is arranged circumferentially to, and outside, the first cylinder 1 so as to completely enclose the outer side wall 1e of the first cylinder 1.

Once the coupling member 2 is calendered and positioned around the first cylinder 1, the weld of the coupling member 2 on the outer side wall 2e is provided along a line parallel to the extension axis X of the first cylinder 1. Such weld allows the coupling member 2 to completely cover and enclose the outer side wall 1e of the first cylinder 1.

According to an aspect of the present description, the step of providing the first cylinder 1 and the step of providing the coupling member 2 comprise the step of providing the first cylinder 1 and the coupling member 2 realized by the same material.

According to the present description, the first cylinder 1 and the coupling member 2 are preferably realized in metal.

More preferably, the first cylinder 1 and the coupling member 2 are realized in stainless steel.

Advantageously, the fact that the first cylinder 1 (in contact inside to the product to be worked) is realized in stainless steel allows to guarantee high hygienic standards.

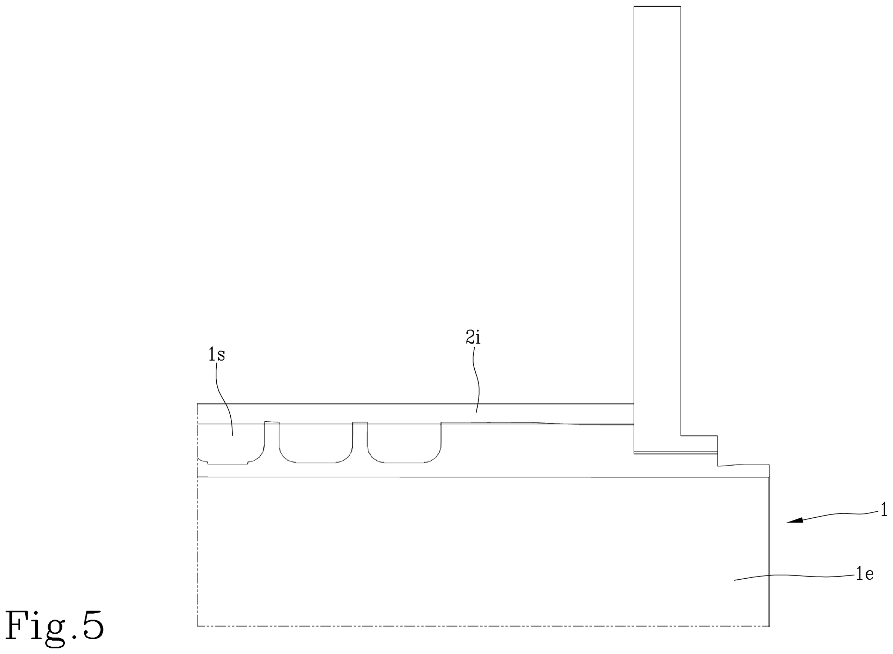

The method comprises the step of carrying out a fully penetrating weld of an inner wall 2i of the coupling member 2 to the first cylinder 1 at the grooved profile 1s obtained on the outer side wall 1e of the first cylinder 1. According to an aspect shown in figure 5, the weld between the inner side wall 2i of the coupling member 2 and the outer side wall 1e of the first cylinder 1 is realized at the at least one grooved profile 1s.

According to another aspect of the present description, the weld between the inner side wall 2i of the coupling member 2 and the outer side wall 1e of the first cylinder 1 is realized at the plurality of grooved profiles 1s. According to another aspect shown in figure 5, the weld between the inner side wall 2i of the coupling member 2 and the outer side wall 1e of the first cylinder 1 is fully penetrating.

The weld between the outer side wall 1e of the first cylinder 1 and the inner wall 2i of the coupling member 2 is complete along the whole grooved profile 1s.

Therefore, the weld between the first cylinder 1 and the coupling member 2 is complete along the whole grooved profile 1s.

The step of carrying out the weld is provided by using a device 3 apt to generate heat without contact to the surfaces it is acting on.

So, the device 3 used to carry out the step of welding has no contact to the surfaces of the first cylinder 1 and of the coupling member 2 it is acting on.

According to an aspect of the present description, the device 3 used to carry out the welding step is a laser.

The weld realized between the first cylinder 1 and the coupling member 2 is a laser weld, in which a highly concentrated beam is used to melt the two surfaces with an extremely limited heat contribution.

The weld occurs by focusing the laser beam on the outer surface of the outer side wall 2i of the coupling member 2 and by generating a localized fusion at the grooved profile 1s of the first cylinder 1, thus creating a lasting metal connection between the outer side wall 1e of the first cylinder 1 and the inner side wall 2i of the coupling member 2.

The step of carrying out the weld comprises a step of moving the device 3 apt to generate heat, relative to the first cylinder 1 and the coupling member 2.

According to another aspect of the present description, the step of carrying out the weld comprises the step of rotating the first cylinder 1 and the coupling member 2 around the main axis X.

The step of carrying out the weld comprises the step of moving the device 3 apt to generate heat, along the main axis X.

The step of rotating the first cylinder 1 and the coupling member 2 around the main axis X and of moving the device 3 apt to generate heat, along the main axis X are carried out at the same time, in phase relation.

In other words, during the step of carrying out the weld, the first cylinder 1 and the coupling member 2 rotate simultaneously around their main extension axis X while the device 3 apt to generate heat moves along the main axis X (in phase relation to the rotation of the first cylinder 1 and the coupling member 2). The device 3 apt to generate heat moves parallel to the main axis X.

The step of rotating the first cylinder 1 and the coupling member 2 and the step of moving the device 3 apt to generate heat are synchronized.

More precisely, the step of rotating the first cylinder 1 and the coupling member 2 and the step of moving the device 3 apt to generate heat occur in a coordinate manner and in an exact phase relation.

Advantageously, such phase relation ensures that the weld is carried out uniformly along the whole grooved profile 1s, thus guaranteeing a precise and homogeneous junction between the first cylinder 1 and the coupling member 2.

Advantageously, such phase relation guarantees that the weld is carried out uniformly along the plurality of grooved profiles 1s, thus guaranteeing a precise and homogeneous junction between the first cylinder 1 and the coupling member 2.

The step of carrying out the weld provides, on the outer side wall 2e of the coupling member 2, differently coloured areas corresponding to the welding zones.

According to another aspect of the present description, the step of carrying out the weld comprises a step of obtaining an incision 2c at the outer side wall 2e of the coupling member 2.

The incision 2c, obtained on the outer side wall 2e of the coupling member 2, has a shape corresponding to the grooved profile 2s of the first cylinder 1.

The method, object of the present description, prior to the step of carrying out the weld, comprises a step of positioning the first cylinder 1 and the coupling member 2 so that the incision 2c, obtained on the outer side wall 2e of the coupling member 2, corresponds to the grooved profile 1s provided on the outer side wall 1e of the first cylinder 1.

According to the present description, the step of carrying out the weld starts after the step of positioning the first cylinder 1 and the coupling member 2 so to make the incision 2c correspond to the grooved profile 1s. The step of carrying out the weld is realized at the grooved profile 1s of the first cylinder 1 at which it is positioned the incision 2c, obtained on the outer side wall 2e of the coupling member 2.

Advantageously, the step of positioning the first cylinder 1 and the coupling member 2 so that a point-to-point correspondence occurs between the grooved profile 1s and the incision 2c allows the laser beam, emitted by the device 3 apt to generate heat, to be concentrated (releasing heat) exactly in the desired area.

Moreover, an optimal correspondence between the grooved profile 1s and the incision 2c allows to obtain a more uniform and robust weld, thus reducing weak points and/or structural defects.

According to another aspect of the present description, prior to the step of carrying out the weld, the method comprises the step of providing a light emitter 4.

The method comprises also the step of actuating the light emitter 4 to indicate, by means of the emitted light, an initial point 5 at the incision 2c on the outer side wall 2e of the coupling member 2.

The method according to the present description comprises also the step of positioning the device 3 apt to generate heat, preferably a laser device, at the initial point 5.

The method according to the present description comprises also the step of positioning the device 3 apt to generate heat, preferably a laser device, at the initial point 5 and to carry out the welding.

In other words, the initial point 5 indicates a point of the incision 2c from which the step of carrying out the weld has to start.

The initial point 5 indicates the point on the outer side wall 2e of the coupling member 2 at which the device 3 apt to generate heat is positioned to carry out the welding.

According to an aspect of the present description, the step of carrying out the weld comprises the step of generating heat by means of a device 3 apt to generate heat without contact to the surfaces, at the incision 2c on the outer side wall 2e of the coupling member 2.

According to another aspect, the device 3 apt to generate heat allows to carry out the welding by generating heat starting from an initial point 5 provided on the outer side wall 2e of the coupling member 2.

During the step of carrying out the welding, the device 3 apt to generate heat moves along the main axis X at the same time as the rotation of the first cylinder 1 and the coupling member 2 around the same axis X.

The welding is carried out along the incision 2c, obtained on the outer side wall 2e of the coupling member 2, when it is positioned at the at least one grooved profile 1s, obtained on the outer side wall 1e of the first cylinder 1. Advantageously, the above-described welding method allows to obtain an adjoining weld between the first cylinder 1 and the coupling member 2. The adjoining weld between the first cylinder 1 and the coupling member 2 is realized at the path defined by the at least one grooved profile 1s obtained on the outer side wall 1e of the first cylinder 1.

The grooved profile 1, obtained on the outer side wall 1e of the first cylinder 1, is positioned at the incision 2c obtained on the outer side wall 2e of the coupling member 2.

It is to be observed that inside the first cylinder 1, it is typically arranged the product to be worked and a stirrer.

Therefore, the fully penetrating welding occurs between the grooved profile 1s and the inner side wall 2i of the coupling member 2 at the points indicated (defined) by the incision 2c obtained on the same cylinder. Object of the present description is also a batch freezing unit 100 for realizing a liquid or semiliquid food product.

The batch freezing unit 100 is realized by carrying out the steps of the method object of the present description.

The batch freezing unit 100 comprises a first cylinder 1. The first cylinder 1 is hollow, extends along a main axis X and has an outer side wall 1e on which a grooved profile 1s defining a continuous circuit is formed.

According to another aspect, the batch freezing unit 100 comprises a stirrer, housed inside the first cylinder 1 (not shown).

The grooved profile 1s, obtained on the outer side wall 1e of the first cylinder 1, has a radial dimension between 4 mm and 12 mm (more preferably between 5 mm and 10 mm).

The grooved profile 1s defines a continuous circuit, in which a heat transfer fluid flows while in use. The heat transfer fluid flows through the continuous circuit, defined by the grooved profile 1s, starting from a first end 1a to a second end 1b. The first end 1a defines an inlet point of the heat transfer fluid in the continuous duct and the second end 1b defines an outlet point of the heat transfer fluid from the continuous duct of the batch freezing unit 100.

The grooved profile 1s defines essentially a heat exchanger (condenser of a thermodynamic plant) to transfer heat (to cool) the liquid or semiliquid product housed inside the first cylinder 1.

It is to be observed that the batch freezing unit 100 is preferably connected to a thermodynamic plant (not shown).

The thermodynamic plant comprises a circuit, inside which a heat transfer fluid is arranged.

The thermodynamic plant comprises a compressor (not shown), a pressure reducing element (not shown), an evaporator defined by the grooved profile 1s and a condenser.

The thermodynamic plant is configured to carry out a vapour compression inverted cycle by means of the heat transfer fluid.

The batch freezing unit 100 comprises a coupling member 2.

The coupling member 2 is hollow and arranged coaxially outside the first cylinder 1.

The coupling member 2 is arranged so as to completely enclose the outer side wall 1e of the first cylinder 1.

In other words, the inner side wall 2i of the coupling member 2 covers the outer side wall 1e of the first cylinder 1 completely. According to the present description, the first cylinder 1 and the coupling member 2 are realized by the same material.

Preferably the first cylinder 1 and the coupling member 2 are realized in metal. More preferably, the first cylinder 1 and the coupling member 2 are realized in stainless steel.

According to the present description, the outer side surface 2e of the coupling member 2 has an incision 2c. The incision 2c indicates a welding path.

In the batch freezing unit 100 the incision 2c, provided on the side wall 2e of the coupling member 2, is positioned at the grooved profile 1s obtained on the outer side wall 1e of the first cylinder 1.

The batch freezing unit 100 comprises the first cylinder 1 and the coupling member 2 positioned coaxially to each other so that the incision 2c, provided on the side wall 2e of the coupling member 2, is at the grooved profile 1s obtained on the outer side wall 1e of the first cylinder 1.

During the welding, the geometrical correspondence between the incision 2c and the grooved profile 1s guarantees a full penetration between the contact points of the first cylinder 1 and the points of the coupling member 2, thus preventing respective movements between the surfaces and improving the seal of the same.

This configuration optimizes the efficiency of the weld between the first cylinder 1 and the coupling member 2, thus guaranteeing a structurally solid weld.

Moreover, the outer side wall 2e of the coupling member 2 has an initial point 5 at the incision 2c.

The initial point 5 indicates a point of the incision 2c from which the weld between the first cylinder 1 and the coupling member 2 starts.

According to the present description, the outer side wall 2e of the coupling member 2 has differently coloured areas corresponding to the zones where the welding is carried out.

Advantageously, the batch freezing unit 100, realized by carrying out the method object of the present description, allows a trans-critical heat transfer fluid, working at high pressures, to circulate inside the continuous circuit defined by the grooved profile 1s.

Moreover, object of the present invention is a plant 50 for making a batch freezing unit 100.

The plant 50 comprises fastening means 10 of a first cylinder 1 and a coupling member 2. The fastening means 10 keep the first cylinder 1 and the coupling member 2 in the welding position.

In other words, the fastening means 10 allow to have the first cylinder 1 and the coupling member 2 in such a position that the at least one grooved profile 1s, obtained on the outer side portion 1e of the first cylinder 1, is at the incision 2c provided on the outer side wall 2e of the coupling member 2, during the step of carrying out the welding between the first cylinder 1 and the coupling member 2.

The first cylinder 1 extends along a main axis X and has an outer side wall 1e on which at least a grooved profile 1s defining a continuous circuit is obtained.

According to another aspect of the present description, the outer side wall 1e of the first cylinder 1 has a plurality of grooved profiles 1s. The grooved profiles 1s of the plurality of grooved profiles 1s are arranged side by side along a helical path.

The coupling member 2 is arranged circumferentially outside the first cylinder 1.

The respective positioning of the first cylinder 1 and the coupling member 2 in the plant 50 object of the present description is such that the inner side wall 2i of the coupling member 2 encloses the outer side wall 1e of the first cylinder 1 completely.

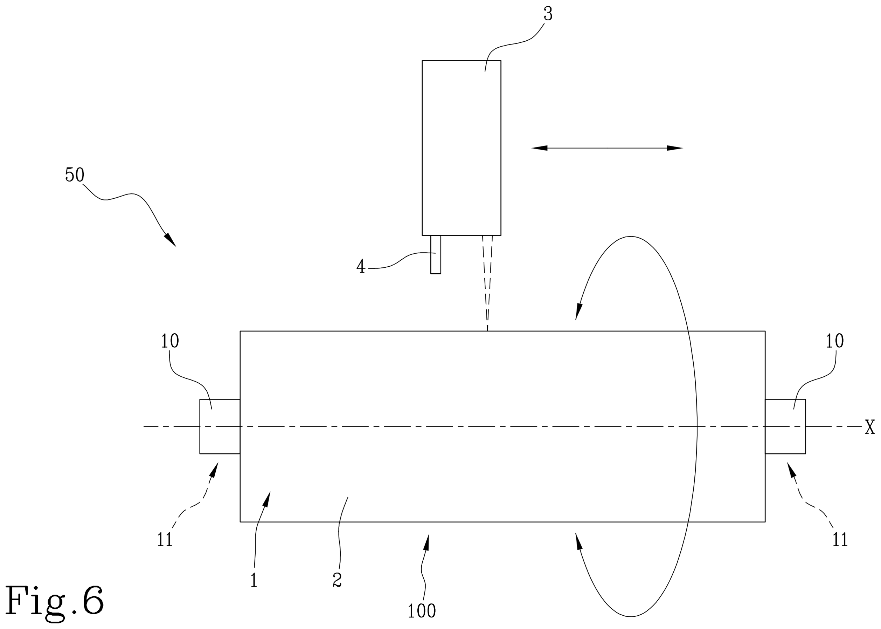

The plant 50 (schematically shown in figure 6) comprises a device 3 apt to generate heat without contact to the surfaces on which it is acting, the device 3 being preferably a laser. The device 3 apt to generate heat allows to realize the welding, the same plant 50 is designed to.

Moreover, the plant 50 object of the present description comprises movement means 11 for moving the first cylinder 1 and the coupling member 2 relative to each other. Such movement means 11 allow to move the first cylinder 1 in phase relation to the coupling member 2 so that the step of the method, object of the present description, of positioning the first cylinder 1 and the coupling member 2 is carried out.

Advantageously, the movement means 11 allow to position the first cylinder 1 and the coupling member 2 so that the incision 2c, obtained on the outer side wall 2e of the coupling member 2, corresponds to the grooved profile 1s provided on the outer side wall 1e of the first cylinder 1. Advantageously, the described plant 50 allows to carry out the steps described by the method according to the present description to make a batch freezing unit 100 according to the same description.

Advantageously, the method for making the batch freezing unit 100, object of the present description, allows to overcome the drawbacks of the realization methods of the known art.

More advantageously, the batch freezing unit 100, object of the present description, allows to provide a high technologically efficient batch freezing unit.

## Claims

1. A method for making a batch freezing unit (100) for containing liquid or semiliquid food products, comprising the following steps:
- providing a first hollow cylinder (1), extending along a main axis (X) and having an external side wall (1e) on which there is formed at least one grooved profile (1s) defining a continuous circuit;
- providing a coupling member (2), also hollow;
- disposing the coupling member (2) circumferentially around the outside of the first cylinder (1), so as to completely enclose the external side wall (1e) of the first cylinder (1);
the method being **characterized in that** it comprises a step of making a fully penetrating weld to join an inside wall (2i) of the coupling member (2) to the first cylinder (1) at the at least one grooved profile (1s).

2. The method according to the preceding claim, wherein the step of making the weld is carried out using a device (3) for generating heat without coming into contact with the surfaces on which it operates, the device (3) for generating heat being preferably a laser.

3. The method according to claims 1 and 2, wherein the step of making the weld comprises a step of moving the device (3) for generating heat relative to the first cylinder (1) and to the coupling member (2).

4. The method according to any one of the preceding claims, wherein the step of making the weld comprises the following steps:
- setting the first cylinder (1) and the coupling member (2) in rotation about the main axis (X);
- moving the device (3) for generating heat along the main axis (X);
the step of rotating and the step of moving being carried out simultaneously, in sync.

5. The method according to any one of the preceding claims, comprising the following steps:
- providing a coupling member (2) consisting of a sheet of metallic material;
- calendering the sheet of metallic material to make the coupling member (2);
- disposing the coupling member (2) circumferentially around the first cylinder (1);
- welding the coupling member (2) to the external side wall (2e) along a line parallel to the axis of extension (X) of the first cylinder (1).

6. The method according to any one of the preceding claims, wherein the step of making the weld produces differently coloured areas, corresponding to the welding zones, on the external side wall (2e) of the coupling member (2).

7. The method according to one or more of the preceding claims, wherein the step of making the weld comprises a step of forming, on the external side wall (2e) of the coupling member (2), an incision (2c) whose shape corresponds to the at least one grooved profile (1s) of the first cylinder (1).

8. The method according to one or more of the preceding claims, comprising a step of positioning the first cylinder (1) and the coupling member (2) in such a way as to align the incision (2c) formed on the external side wall (2e) of the coupling member (2) with the grooved profile (1s) on the external side wall (1e) of the first cylinder (1).

9. The method according to one or more of the preceding claims, wherein the step of making the weld is preceded by the following steps:
- providing a luminous emitter (4);
- activating the luminous emitter (4) to indicate, with the emitted light, a starting point (5) at the incision (2c) on the external side wall (2e) of the coupling member (2);
- positioning the device (3) for generating heat at the starting point (5) without coming into contact with the surfaces, and making the weld.

10. The method according to one or more of the preceding claims, wherein the step of making the weld comprises a step of generating heat with a device (3) for generating heat without coming into contact with the surfaces, at the incision (2c) on the external side wall (2e) of the coupling member (2).

11. The method according to one or more of the preceding claims, wherein the step of providing a first cylinder (1) and the step of providing a coupling member (2) comprise the step of providing a first cylinder (1) and a coupling member (2) made of the same material, preferably metal, and still more preferably, stainless steel.

12. A batch freezing unit (100) for making a liquid or semiliquid food product, made according to the method of claims 1 to 11; the batch freezing unit (100) comprising:
- a first hollow cylinder (1), extending along a main axis (X) and having an external side wall (1e) on which there is formed at least one grooved profile (1s) defining a continuous circuit;
- a coupling member (2) disposed circumferentially around the outside of the first cylinder (1), so as to completely enclose the external side wall (1e) of the first cylinder (1).

13. The unit (100) according to claim 12, wherein the first cylinder (1) and the coupling member (2) are made of the same material, preferably metal, and still more preferably, stainless steel.

14. The unit (100) according to claim 12 or 13, wherein the external side wall (1e) of the first cylinder (1) has a plurality of grooved profiles (1s) running side by side along a helical path.

15. The unit (100) according to claims 12 to 14, wherein the radial dimension of the grooved profile (1s) of the first cylinder (1) is between 4 mm and 12 mm.

16. The unit (100) according to one or more of claims 12 to 15, wherein the external side wall (2e) of the coupling member (2) has an incision (2c) which indicates a welding path.

17. A plant (50) for making a batch freezing unit (100) according to claims 12 to 16, comprising:
- fastening means (10) for fastening a first cylinder (1) and a coupling member (2), the first cylinder (1), extending along a main axis (X) and having an external side wall (1e) on which there is formed a grooved profile (1s) defining a continuous circuit, the coupling member (2) being also hollow and being disposed coaxially around the outside of the first cylinder (1) so as to completely enclose the external side wall (1e) of the first cylinder (1);
- a device (3) for generating heat without coming into contact with the surfaces on which it operates, the device (3) for generating heat being preferably a laser;
movement means (11) for moving the first cylinder (1) relative to the coupling member (2).
